# EUROPÄISCHE PATENTANMELDUNG

(11) **EP 1 283 102 A2**
(43) Veröffentlichungstag der Anmeldung: **12.02.2003**
(21) Anmeldenummer: 02017361.3
(22) Anmeldetag: 02.08.2002
(51) Int. Cl.: B29C 47/10, B29B 9/14, C08J 5/04

(54) **Langfaserverstärkte Polyolefin-Kunststoff-Struktur, Verfahren zu seiner Herstellung und daraus hergestellte Formkörper**

(30) Priorität: 07.08.2001 DE 10137924
(71) Anmelder: Ticona GmbH, 65451 Kelsterbach (DE)
(72) Erfinder: Bernd, Heinz, 64646 Heppenheim (DE); Heydweiler, Joachim, 65428 Ruesselsheim (DE); Wunder, Heribert, Dipl.-Ing., 65795 Hattersheim (DE)

(57) **Zusammenfassung**

Die vorliegende Erfindung betrifft langfaserverstärkte Polyolefin-Kunststoff Strukturen mit einer Länge von ≥ 3 mm, enthaltend
a) 0.1 Gew.-% bis 90 Gew.-% mindestens eines Polyolefin-Kunststoffes, der von b) verschieden ist,
b) 0.1 Gew.-% bis 50 Gew.-% mindestens eines amorphen Cycloolefinpolymeren,
c) 5.0 Gew.-% bis 75 Gew.-% mindestens einer Verstärkungsfaser,
d) bis 10.0 Gew.-% weitere Zusatzstoffe,
Verfahren zu ihrer Herstellung und daraus hergestellte Formteile. Die erfindungsgemäßen Formteile besitzen einen geringeren Verzug und eine höhere Paßgenauigkeit.

## Beschreibung

Die vorliegende Erfindung betrifft eine langfaserverstärkte Polyolefin-Kunststoff Struktur und daraus hergestellte Formkörper mit sehr guter Schlagzähigkeit, hoher Wärmeformbeständigkeit (HDT) und deutlich verringertem Verzug daraus hergestellter Formkörper. Die vorliegende Erfindung betrifft weiter die Herstellung und Verwendung der hergestellten Formkörper.

Polyolefin-Kunststoffe, insbesondere solche, die Polyethylen und Polypropylen umfassen, sind kostengünstige thermoplastische Kunststoffe mit einem leichten spezifischen Gewicht, guter Schmelzbarkeit sowie Widerstandsfähigkeit gegen chemische Einflüsse. Diese werden daher vielfach in Bereichen, wie allgemeine Haushaltsartikel, elektrischen und elektronischen Teilen verwendet. Polyolefin-Kunststoffe weisen jedoch gewöhnlich niedrige Wärmeformbeständigkeit (HDT) und niedrige mechanische Eigenschaften auf. Daher sind diese Kunststoffe für die Verwendung in Bereichen nicht geeignet, wo hohe Wärmeformbeständigkeit und hohe mechanische Festigkeit benötigt werden.

Es war bekannt, zur Verbesserung der Festigkeit eines Polyolefin-Kunststoffes, einer Verstärkungsfaser wie Glasfaser mit dem Polyolefin-Kunststoff zu mischen. Gewöhnlich wurde eine faserverstärkte Polyolefin-Kunststoffzusammensetzung erhalten, in dem ein Polyolefin-Kunststoff mit kurzen Verstärkungsfasern gemischt wurde und dann das Gemisch in einem Extruder extrudiert wurde. Dieses Verfahren weist jedoch den Nachteil auf, daß die Fasern beim Mahlen im Extruder brechen. Es können mit diesem Verfahren keine Formkörper erhalten werden, die die gewünschte höhere mechanische Festigkeit aufweisen.

Es war auch bekannt ein Polyolefin-Kunststoff mit langen Fasern zu verstärken, wobei die Eigenschaft der Verstärkungsfaser auf das zu mischenden Polyolefin angewendet wird. Solch eine langfaserverstärkte Polyolefin Struktur kann zum Beispiel erhalten werden, in dem eine kontinuierlich abgewickelte Verstärkungsfaser in eine Emulsion oder eine Lösung eines Polyolefin-Kunststoffes oder in eine Polyolefin-Kunststoffschmelze getaucht wird. Der langfaserverstärkte Polyolefin-Kunststoff zeigt verglichen mit dem vorstehend beschriebenen kurzfaservestärkten Polyolefin-Kunststoff gute mechanische Eigenschaften.

Es ist bekannt, bevorzugt ein modifiziertes Polyolefin zu verwenden, da es funktionale Gruppen trägt, die eine hohe Affinität für den Polyamid-Kunststoff haben. Dadurch wird die Affinität zwischen dem Polyolefin-Kunststoff und dem Polyamid-Kunststoff erhöht und dadurch die Fähigkeit zur Ausbildung der Netzwerkstruktur verbessert. Wenn der Anteil an modifiziertem Polyolefin weniger als 1 Gew.-% beträgt, kann der Effekt nicht einsetzen. Wenn der Anteil 50 Gew.-% übersteigt, steigt die Viskosität der Zusammensetzung an, was zu Schwierigkeiten bei der Formgebung führen kann.

Der Polyolefin-Kunststoff kann durch Polymerisation des Ethylens oder eines α-Olefins, wie Propylen, mit einem geeigneten Katalysator hergestellt werden.

Wenn der Anteil an Verstärkungsfaser weniger als 10 Gewichtsteile beträgt, wird nur ein geringer Verstärkungseffekt durch die Faser erreicht. Wenn der Anteil an Verstärkungsfaser 200 Gewichtsteile übersteigt, wird die Herstellung der stabförmigen Struktur erschwert oder die Fähigkeit zur Verarbeitung zu einem Formkörper erheblich verschlechtert.

Es sind Zusammensetzungen enthaltend Polyolefin-Kunststoff und Glasfaser aus dem Stand der Technik bekannt. Diese Zusammensetzungen werden unter anderem in JP-A 03126740, JP-A 03124748, GB-A 2225584, JP-A 02107664, JP-A 01087656, JP-A 01066268, JP-A 63305148, JP-B 06018929, JP-A 60104136, JP-B 61026939, JP-A 56030451, JP-A 6322266, JP-A 7053861 und JP-A 6234896 beschrieben.

Für viele Anwendungen wird eine langfaserverstärkte Polyolefin-Kunststoff Struktur gefordert. Bei Verwendung dieser Materialien werden nicht nur die mechanischen Eigenschaften im Vergleich zu unverstärkten oder kurzfaserverstärkten Materialien verbessert, sondern auch der Verzug daraus hergestellter Formkörper im Spritzgußverfahren reduziert. Nachteilig ist jedoch, daß der Plattenverzug bei Formkörpern, die freitragende Wände ohne Abstützung besitzen weiterhin hoch bleibt.

Es ist bekannt, diesen Plattenverzug durch entsprechende Auslegung der Werkzeuge und Prozeßparameter, wie zum Beispiel eine erhöhte Nachdruckzeit zu reduzieren. Auf diese Weise kann der Verzug -sowohl Plattenverzug als auch der Eckenverzug- aber nicht weit genug reduziert werden, so daß das Maß und damit die Paßgenauigkeit der hergestellten Formteile für viele Anwendungen unzureichend ist.

Die Aufgabe der vorliegenden Erfindung besteht darin, eine langfaserverstärkte Polyolefin-Kunststoff Struktur mit sehr guten mechanischen Eigenschaften, guter Wärmebeständigkeit und geringer Wasserabsorption sowie mit geringem Verzug bereitzustellen.

Die Aufgabe der vorliegenden Erfindung wird gelöst durch eine langfaserverstärkte Polyolefin-Kunststoff Struktur mit einer Länge von ≥ 3 mm, die
a) 0.1 Gew.-% bis 90 Gew.-% mindestens eines Polyolefin-Kunststoffes, der von b) verschieden ist,
b) 0.1 Gew.-% bis 50 Gew.-% mindestens eines amorphen Cycloolefinpolymeren,
c) 5.0 Gew.-% bis 75 Gew.-% mindestens einer Verstärkungsfaser,
d) bis 10.0 Gew.-% weitere Zusatzstoffe enthält.

Die vorliegende Erfindung ist gekennzeichnet durch die Verwendung mindestens-eines amorphen Cycloolefinpolymeren. Die so erhaltene langfaserverstärkte Polyolefin-Kunststoff Struktur weist unerwartet und überraschend sehr gute mechanische Eigenschaften, sehr gute Wärmeformbeständigkeit und geringe Wasserabsorption auf. Aus dieser langfaserverstärkten Polyolefin-Kunststoff Struktur hergestellte Formkörper weisen neben den guten mechanischen Eigenschaften einen überraschend niedrigen Eckenverzug und Plattenverzug auf. Die daraus hergestellten Formkörper besitzen ein besseres Maß und eine verbesserte Paßgenauigkeit.

Eine bevorzugte Ausgestaltung der Erfindung ist eine langfaserverstärkte Polyolefin-Kunststoff Struktur, die
a) 4.0 Gew.-% bis 70 Gew.-% mindestens eines Polyolefin-Kunststoffes, der von b) verschieden ist,
b) 1.0 Gew.-% bis 30 Gew.-% mindestens eines amorphen Cycloolefinpolymeren,
c) 10 Gew.-% bis 65 Gew.-% mindestens eines Verstärkungsfasers,
d) 0.15 Gew.-% bis 7.5 Gew.-% weitere Zusatzstoffe enthält.

Diese Zusammensetzung weist hervorragende mechanische Eigenschaften, Wärmeformbeständigkeit und sehr geringe Wasserabsorption und sehr niedrigen Verzug auf.

Eine besonders bevorzugte Ausgestaltung der Erfindung ist eine langfaserverstärkte Polyolefin-Kunststoff Struktur, die
a) 30 Gew.-% bis 70 Gew.-% mindestens eines Polyolefin-Kunststoffes, der von b) verschieden ist
b) 4.0 Gew.-% bis 20 Gew.-% mindestens eines amorphen Cycloolefinpolymeren,
c) 19 Gew.-% bis 58 Gew.-% mindestens einer Verstärkungsfaser,
d) 0.2 Gew.-% bis 5.0 Gew.-% weitere Zusatzstoffe enthält.

Diese Zusammensetzung weist ganz hervorragende mechanische Eigenschaften, Wärmeformbeständigkeit und sehr geringe Wasserabsorption und einen außerordentlich geringen Verzug auf.

Erfindungsgemäß kann der Polyolefin-Kunststoff a) erhalten werden durch Additionspolymerisation des Ethylens oder eines α-Olefins, wie Propylen, mit einem geeigneten Katalysator. Beispiele für den Polyolefin-Kunststoff a) sind Homopolymere mit hoher, mittlerer und niedriger Dichte, wie Polyethylen, Polypropylen, Polymethylpenten und Copolymere dieser Polymere. Die Homopolymere und Copolymere können gradkettig und verzweigt vorliegen. Bei der Verzweigung gibt es keine Beschränkung so lange die Verformbarkeit gegeben ist. Ein Gemisch aus zwei und mehreren dieser Polymere können verwendet werden. Bei diesen Materialien handelt es sich meist um teilkristalline Homopolymere von α-Olefinen und/oder Ethylen oder deren Copolymeren miteinander. Erfindungsgemäß wird bevorzugt Polypropylen als Polyolefin-Kunststoff verwendet. Der Polyolefin-Kunststoff kann außerdem in Mengen von 0,1 bis 20 Gew.-%, 20 bis 24 Gew.-%, 25 bis 30 Gew.-% oder auch 80 bis 90 Gew.-% in der erfindungsgemäßen langfaserverstärkten Polyolefin-Kunststoff Struktur enthalten sein.

Zur Verbesserung der Wärmeformbeständigkeit (HDT) und der Schlagzähigkeit kann ein Teil des Polyolefin-Kunststoffes mit Polyamid-Kunststoff substituiert werden. Hierfür sind verschiedene Polyamide geeignet. Beispiele sind Polyamide, die erhalten werden durch Polykondensation von Dicarbonsäuren, wie Oxalsäure, Adipinsäure, Suberinsäure, Sebacinsäure, Terephthalsäure, Isophthalsäure oder 1,4-Cyclohexyldicarbonsäure mit einem Diamin, wie Ethylendiamin, Pentamethylendiamin, Hexamethylendiamin, Decamethylendiamin, 1,4-Cyclohexyldiamin oder m-Xyloldiamin, Polyamidverbindungen erhalten durch Polymerisation von cyclischem Lactam, wie Caprolactam oder Laurolactam und Polyamide erhalten durch Copolymerisation von cyclischem Lactam und einem Dicarbonsäuresalz mit einem Diamin. Erfindungsgemäß sind Nylon 6 (Polyamid 6), Nylon 66 (Polyamid 66) und Copolymere davon bevorzugt. Erfindungsgemäß ist der Polyamid-Kunststoff Nylon 6 besonders bevorzugt. Nylon 6 weist eine höhere Wärmeformbeständigkeit (HDT) als der Polyolefin-Kunststoff (a) auf. Durch den Zusatz von Nylon 6 wird die HDT und zusätzlich die Schlagzähigkeit des Gemisches erhöht. Der Polyamid-Kunststoff kann in Mengen von 0.1 bis 50 Gew.-%, vorteilhaft von 1.0 bis 40 Gew.-%, besonders vorteilhaft 4.0 bis 30 Gew.-%, insbesondere Verwendung von 4 Gew.-% bis 15 Gew.-% in der erfindungsgemäßen langfaserverstärkten Polyolefin-Kunststoff Struktur enthalten sein.

Vorteilhaft enthält das von b) verschiedene Polyolefin a) ein modifiziertes Polyolefin. Das modifizierte Polyolefin kann in Mengen von 0.1 bis 15 Gew.-%, vorteilhaft 0.15 bis 7,5 Gew.-%, insbesondere von 1.5 bis 10 Gew.-% in der erfindungsgemäßen Polyolefin-Kunststoff-Struktur enthalten sein. Das modifizierte Polyolefin enthält mindestens eine der folgenden Gruppen wie Carboxyl-, Carboxylanhydrid-, Metalcarboxylat-, Carboxylester-, Imino-, Amino- oder Epoxygruppe mit 1 Gew.-% bis 50 Gew.-%, bezogen auf den Gesamtanteil aus (a). Beispiele für den modifizierten Polyolefin-Kunststoff umfassen modifizierte Polyolefin Copolymere oder gepfropfte Copolymere, die hergestellt werden in dem chemisch folgende beispielhaft aufgeführte Verbindungen, wie Maleinsäureanhydrid, Fumarsäureanhydrid, Zitronensäureanhydrid, N-Phenylmaleimid, N-Cyclohexylmaleinimid, Glyicidylacrylat, Glycidylmethacrylat, Glycidylvinylbenzoat, N-[4-(2,3-epoxpropoxy)-3,5-dimethylbenzyl]acrylamid (AXE), Alkylmethacrylate und/oder Derivate davon in Polyolefine, wie Polypropylen, Polyethylen oder Ethylen/Propylen-Copolymere und in Polyamid gepfropfte Polyolefine eingeführt werden. Das modifizierte Polyolefin ist im Polymerisationsgrad nicht beschränkt, es kann auch ein Oligomer sein. Besonders bevorzugte modifizierte Polyolefine sind Maleinsäureanhydrid-modifiziertes Polyethylen, Maleinsäureanhydrid-modifiziertes Polypropylen, Maleinsäureanhydrid-modifiziertes Polyethylen/Polypropylen-Copolymer, Fumarsäureanhydrid-modifiziertes Polyethylen, Fumarsäureanhydrid-modifiziertes Polypropylen, Fumarsäureanhydrid-modifiziertes Polyethylen/Polypropylen-Copolymer, Glycidylmethacrylat-modifiziertes Polyethylen, Glycidylmethacrylat-modifiziertes Polypropylen, AXE-modifiziertes Polyethylen, AXE-modifiziertes Polypropylen und Polyamid gepfropfte Polyolefine.
Das modifizierte Polyolefin kann vorteilhaft in Mengen von 0,1 bis 3,5 Gew.-%, eingesetzt werden. Bei Anwesenheit von Polyamid-Kunststoff in der Polyolefin-Kunststoff Struktur sind höhere Mengen an modifiziertem Polyolefin vorteilhaft, so können in diesem Fall insbesondere 7.5 bis 15 Gew.-% in der erfindungsgemäßen langfaserverstärkten Polyolefin-Kunststoff Struktur vorteilhaft enthalten sein.

Als amorphes Cycloolefinpolymer b) können erfindungsgemäß Copolymere des Ethylens und/oder von α-Olefinen mit cyclischen, bicyclischen und/oder polycyclischen Olefinen eingesetzt werden, wobei die Cycloolefincopolymere mittels Metallocenkatalysatoren oder anderen Übergangsmetallverbindungen technisch meist gut herstellbar sind.

Das amorphe Cycloolefincopolymer, Kompnente b), enthält vorteilhaft mindestens ein Cycloolefincopolymer, enthaltend 0,1 bis 100 Gew.-%, bevorzugt 0,1 bis 99,9 Gew.-% bezogen auf die Gesamtmasse des Cycloolefincopolymers, polymerisierte Einheiten, welche sich ableiten von mindestens einem polycyclischen Olefin der Formeln I, II, II', III, IV, V oder VI 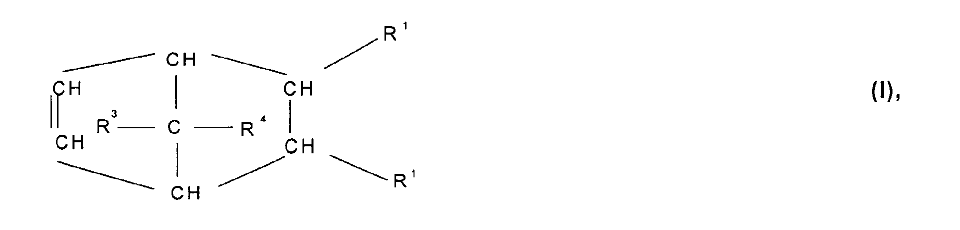 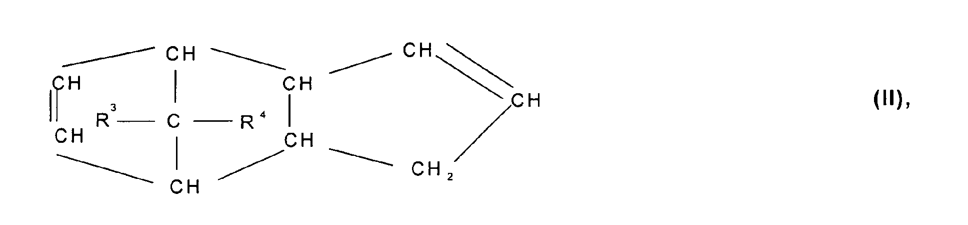 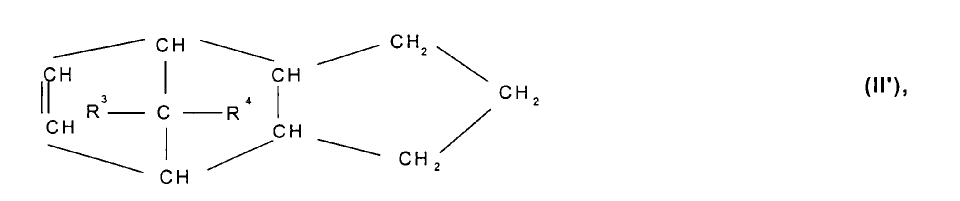 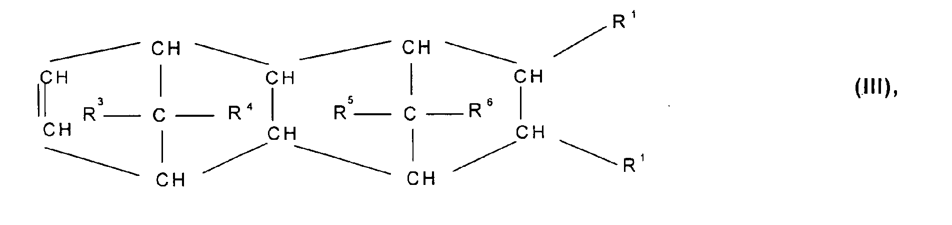 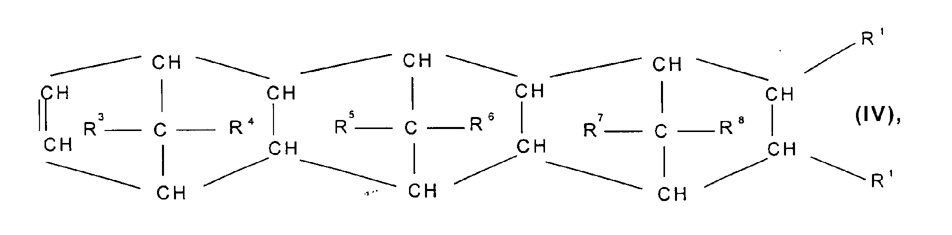 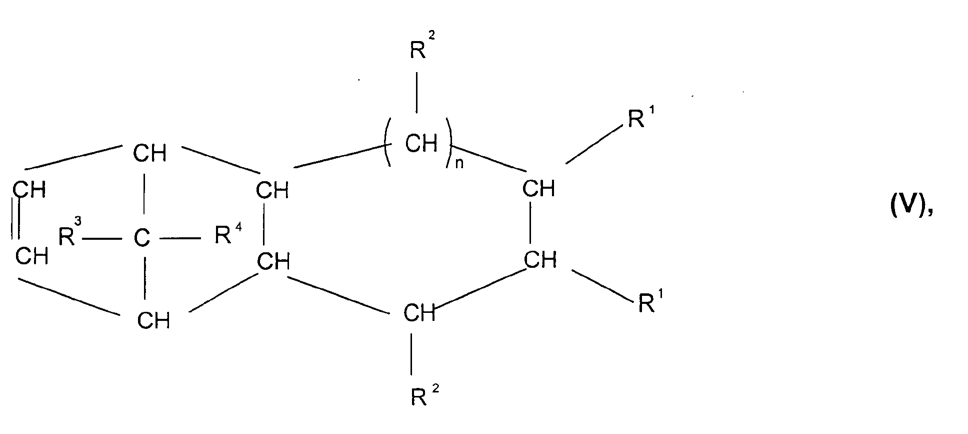 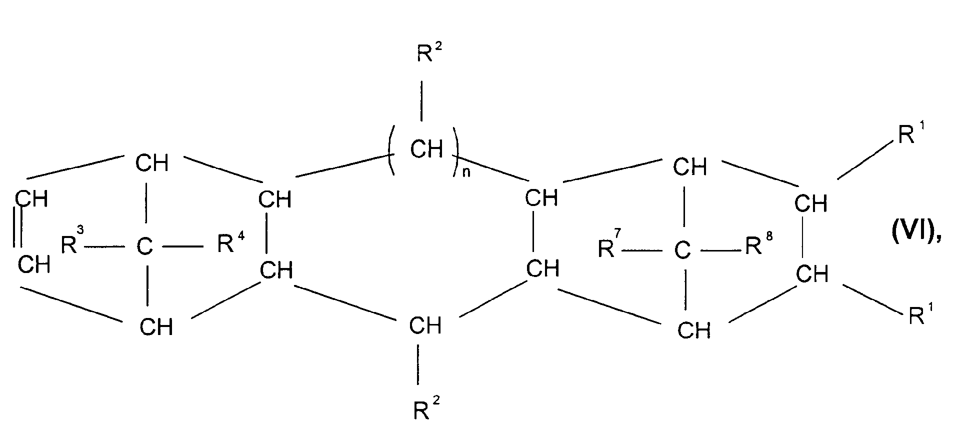 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest, einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und enthaltend 0 bis 99,9 Gew.-%, bevorzugt 0,1 bis 99,9 Gew.-%, bezogen auf die Gesamtmasse des Cycloolefincopolymers, polymerisierte Einheiten, welche sich ableiten von einem oder mehreren acyclischen Olefinen der Formel VII 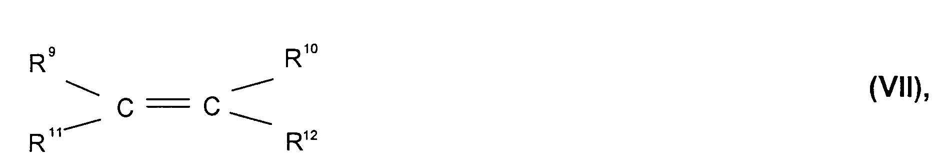 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₈-Arylrest bedeuten.

Außerdem können die erfindungsgemäß verwendeten Cycloolefincopolymere 0 bis 45 Gew.-%, bezogen auf die Gesamtmasse des Cycloolefincopolymers, polymerisierte Einheiten enthalten, welche sich ableiten von einem oder mehreren monocyclischen Olefinen der Formel VIII 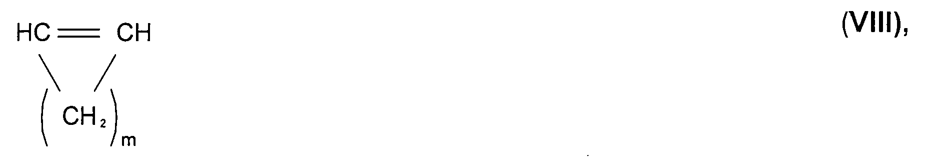 worin m eine Zahl von 2 bis 10 ist.

Bei den cyclischen Olefinen sind ebenfalls Derivate dieser cyclischen Olefine mit polaren Gruppen, wie Halogen-, Hydroxyl-, Ester-, Alkoxy-, Carboxy-, Cyano-, Amido-, Imido- oder Silylgruppen, eingeschlossen.

Bevorzugt im Sinne der Erfindung sind Cycloolefincopolymere, die polymerisierte Einheiten enthalten, welche sich ableiten von polycyclischen Olefinen der Formeln I oder III, und polymerisierte Einheiten, welche sich ableiten von acyclischen Olefinen der Formel VII.

Besonders bevorzugt sind Cycloolefincopolymere, die polymerisierte Einheiten enthalten, welche sich ableiten von Olefinen mit Norbornengrundstruktur, ganz besonders bevorzugt von Norbornen und Tetracyclododecen und gegebenenfalls Vinylnorbornen oder Norbornadien.

Besonders bevorzugt sind auch Cycloolefincopolymere, die polymerisierte Einheiten enthalten, welche sich ableiten von acyclischen Olefinen mit endständigen Doppelbindungen wie α-Olefinen mit 2 bis 20 C-Atomen, ganz besonders bevorzugt Ethylen oder Propylen. Außerordentlich bevorzugt sind Norbornen/ Ethylen- und Tetracyclododecen/ Ethylen-Copolymere.

Bei den Terpolymeren sind besonders bevorzugt Norbornen/Vinylnorbonen/ Ethylen-, Norbornen/Norbornadien/Ethylen-, Tetracyclododecen/Vinylnorbornen/ Ethylen-, Tetracyclododecen/Vinyltetracyclododecen/Ethylen-Terpolymere oder Norbornen/Dicyclopentadien/Ethylen. Der Anteil der polymerisierten Einheiten, die sich ableiten von einem Polyen, bevorzugt Vinylnorbornen oder Norbornadien, liegt bei 0,1 bis 50 mol-%, vorzugsweise bei 0,1 bis 20 mol-%, der Anteil des acyclischen Monoolefins der Formel VII beträgt 0 bis 99,9 mol-%, bevorzugt 5 bis 80 mol-%, bezogen auf die Gesamtzusammensetzung des Cycloolefinpolymers. In den beschriebenen Terpolymeren liegt der Anteil des polycyclischen Monoolefins bei 0,1 bis 99,9 mol-%, bevorzugt 3 bis 75 mol-%, bezogen auf die Gesamtzusammensetzung des Cycloolefinpolymers.

Weitere geeignete Polymere werden in EP-A-317262 beschrieben. Hydrierte Polymere und Copolymere, wie von Styrol oder Dicyclopentadien sind ebenfalls geeignet.

Die erfindungsgemäß verwendeten Cycloolefincopolymere können hergestellt werden bei Temperaturen von -78 bis 200 °C und einem Druck von 0,01 bis 200 bar, in Gegenwart eines oder mehrerer Katalysatorsysteme, welche mindestens eine Übergangsmetallverbindung und gegebenenfalls einen Cokatalysator und gegebenenfalls ein Trägermaterial enthalten. Als Übergangsmetallverbindungen eignen sich Metallocene, insbesondere stereorigide Metallocene. Beispiele für Katalysatorsysteme, welche für die Herstellung der erfindungsgemäßen Cycloolefincopolymere geeignet sind, sind beschrieben in US-A-5,008,356, EP-A-0 407 870, EP-A-0 485 893 und EP-A-0 503 422. Auf diese Referenzen wird hiermit ausdrücklich Bezug genommen. Die Offenbarung dieser Referenzen ist somit Bestandteil der vorliegenden Patentanmeldung.

Beispiele für eingesetzte Übergangsmetallverbindungen sind:
rac-Dimethylsilyl-bis-(1-indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis-(1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-zirkondichlorid,
rac-Ethylen-1,2-bis-(1 -indenyl)-zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Bis(1-indenyl)-zirkondichlorid,
Diphenylmethylen-(9-fluorenyl)-cyclopentadienylzirkondichlorid,
lsopropylen-(9-fluorenyl)-cyclopentadienyl-zirkondichlorid,
rac-lsopropyliden-bis-(1-indenyl)zirkondichlorid,
Phenylmethylmethylen-(9-fluorenyl)-cyclopentadienyl-zirkondichlorid,
lsopropylen-(9-fluorenyl)-(1-(3-isopropyl)cyclopentadienyl)-zirkondichlorid,
lsopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-fluorenyl)(1-(3-methyl)cyclopentadienyl)-zirkondichlorid,
Dimethylsilyl-(9-fluorenyl)(1-(3-methyl)-cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
lsopropylen-(9-fluorenyl)(1-(3-tert.-butyl)cyclopentadienyl)-zirkondichlorid,
Isopropylen-(cyclopentadienyl)-(1-indenyl)-zirkondichlorid,
Diphenylcarbonyl-(cyclopentadienyl)-(1-indenyl)-zirkondichlorid,
Dimethylsilyl-(cyclopentadienyl)-(1-indenyl)-zirkondichlorid,
lsopropylen-(methylcyclopentadienyl)-(1-indenyl)-zirkondichlorid, 4-( η⁵cyclopentadienyl)-4,7,7-trimethyl-(η⁵-4,5,6,7-tetrahydroindenyl-zirkondichlorid,
[4-( η⁵-cyclopentadienyl)-4,7,7-triphenyl-( η⁵-4,5,6,7-tetrahydroindenyl )]zirkondichlorid,
[4-( η⁵-cyclopentadienyl)-4,7-dimethyl-7-phenyl-( η⁵-4,5,6,7-tetrahydroindenyl)]zirkondichlorid,
[4-( η⁵-3'-tert.-butylcyclopentadienyl)-4,7,7-triphenyl-( η⁵-4,5,6,7-tetrahydroindenyl)]zirkondichlorid,
[4-( η⁵-3'-tert.-butylcyclopentadienyl)-4,7-dimethyl-7-phenyl-( η⁵-4,5,6,7-tetrahydroindenyl)]zirkondichlorid,
[4-( η⁵-3'-methylcyclopentadienyl)-4,7,7-trimethyl-( η⁵-4,5,6,7-tetrahydroindenyl)]zirkondichlorid,
[4-( η⁵-3'-methylcyclopentadienyl)-4,7,7-triphenyl-( η⁵-4,5,6,7-tetrahydroindenyl)]zirkondichlorid,
[4-( η⁵-3'-methylcyclopentadienyl)-4,7-dimethyl-7-phenyl-( η⁵-4,5,6,7-tetrahydroindenyl)]zirkondichlorid,
[4-( η⁵-3'-isopropylcyclopentadienyl)-4,7,7-trimethyl-( η⁵-4,5,6,7-tetrahydroindenyl)]zirkondichlorid,
[4-( η⁵-3'-isoproplycyclopentadienyl)-4,7,7-triphenyl-( η⁵-4,5,6,7-tetrahydroindenyl)]zirkondichlorid,
[4-( η⁵-3'-isopropylcyclopentadienyl)-4,7-dimethyl-7-phenyl-( η⁵-4,5,6,7-tetrahydroindenyl)]zirkondichlorid,
[4-(η⁵-cyclopentadienyl)( η⁵-4,5-tetrahydropentalen)]zirkondichlorid,
[4-( η⁵-cyclopentadienyl)-4-methyl-( η⁵-4,5-tetrahydropentalen)]zirkondichlorid,
[4-( η⁵-cyclopentadienyl)-4-phenyl-( η⁵-4,5-tetrahydropentalen)]zirkondichlorid,
[4-( η⁵-cyclopentadienyl)-4-phenyl-( η⁵-4,5-tetrahydropentalen)]zirkondichlorid,
[4-( η⁵-3'-methyl-cyclopentadienyl)( η⁵-4,5-tetrahydropentalen)]zirkondichlorid,
[4-( η⁵-3'-isopropylcyclopentadienyl)( η⁵-4,5-tetrahydropentalen)]zirkondichlorid,
[4-( η⁵-3'-benzyl-cyclopentadienyl)( η⁵-4,5-tetrahydropentalen)]zirkondichlorid,
[2,2,4Trimethyl-4-( η⁵-cyclopentadienyl)-( η⁵-4,5-tetrahydropentalen)]-zirkoniumdichlorid,
[2,2,4Trimethyl-4-( η⁵-(3,4-Di-isopropyl)cyclopentadienyl)-( η⁵-4,5-tetrahydropentalen)]-zirkoniumdichlorid.

Die Herstellung der Cycloolefincopolymere kann auch auf anderen, nachfolgend kurz skizzierten Wegen erfolgen: Katalysatorsysteme basierend auf Mischkatalysatoren aus Titansalzen und Aluminiumorganylen werden in DD-A-109 224 und DD-A-237 070 beschrieben. EP-A-0 156 464 beschreibt die Herstellung mit Katalysatoren auf Vanadiumbasis. Die Cycloolefincopolymere können auch durch ringöffnende Polymerisation mindestens eines der Monomere mit den Formeln I bis VI und anschließender Hydrierung der erhaltenen Produkte hergestellt werden. Die Polymerisation kann auch mehrstufig erfolgen, wobei auch Blockcopolymere entstehen können (DE-A-42 05 416).

Erfindungsgemäß ist die Verstärkungsfaser c) nicht beschränkt auf ein bestimmtes Material. Verstärkungsfasern aus Materialien mit einem hohen Schmelzpunkt (Erweichungspunkt), wie besipielsweise Talkum, Wolastonit, Glasfaser, Kohlefaser, Metallfaser und aromatische Polyamidfaser, können verwendet werden. Erfindungsgemäß werden bevorzugt Glasfaser verwendet. Bei Glasfasern werden gewöhnlich Bündel mit einem Faserdurchmesser von 8 um bis 25 µm und einem Gewicht von 500 g bis 4400 g pro 1000 m verwendet. Die Faser können in an sich bekannter Weise oberflächenbehandelt sein. Die Verstärkungsfaser kann außerdem in Mengen von 5 bis 16 Gew.-% oder 50 bis 75 Gew.-% in der erfindungsgemäßen langfaserverstärkten Polyolefin-Kunststoff Struktur enthalten sein.

Die Faserbündel werden erhalten, in dem eine Anzahl von Fasern genommen und mit einer wäßrigen Lösung oder wäßrigen Emulsion eines Schlichtesystems behandelt und dann gebündelt werden. Bevorzugt werden aufgewickelte Faserbündel verwendet, die gebündelt, getrocknet und auf Spulen aufgewickelt werden (Direkt-Roving). Es ergeben sich im wesentlichen endlos geformte Faserbündel.

Es können in der Polyolefin-Kunststoffstruktur zusätzlich weitere Zusatzstoffe, wie Gleitmittel, Farbstoffe, Pigmente, Antioxidantien, Wärmestabilisatoren, Lichtstabilisatoren, Lichtschutzadditive, Verstärker und Hydrolysestabilisatoren enthalten sein.

Die erfindungsgemäße langfaserverstärkte Polyolefin-Kunststoff Struktur enthält als weitere Zusatzstoffe bevorzugt mindestens ein Antioxidationsmittel und/oder UV-Stabilisator und gegebenenfalls Farbmasterbatch.

Als weitere Zusatzstoffe geeignet sind Verbindungen der Gruppen Amine, Amide, Säureamide, Polyamide und ähnliche Stoffklassen.

Die langfaserverstärkte Polyolefin-Kunststoff Struktur enthält 0.1 Gew.-% bis 4.0 Gew.-%, bevorzugt 0.15 Gew.-% bis 3.0 Gew.-% und besonders bevorzugt 0.2 Gew.-% bis 2.0 Gew.-% Antioxidationsmittel.

Die langfaserverstärkte Polyolefin-Kunststoff Struktur enthält 0.1 Gew.-% bis 4.0 Gew.-%, bevorzugt 0.15 Gew.-% bis 3.0 Gew.-% und besonders bevorzugt 0.2 Gew.-% bis 2.0 Gew.-% UV-Stabilisator.

Die langfaserverstärkte Polyolefin-Kunststoff Struktur enthält 0.1 Gew.-% bis 4.0 Gew.-%, bevorzugt 0.15 Gew.-% bis 3.0 Gew.-% und besonders bevorzugt 0.5 Gew.-% bis 1.5 Gew.-% Farbmasterbatch enthaltend sind.

Die langfaserverstärkte Polyolefin-Kunststoff Struktur kann erfindungsgemäß ein Glasfaserbündel sein, welches mit einer oder mehrerer Schichten Kunststoff ummantelt ist, so daß die Fasern nicht imprägniert sind und erst bei der Verarbeitung, beispielsweise im Spritzguß, eine Mischung der Fasern und des Kunststoffes eintritt. Vorteilhaft sind die Fasern jedoch mit Kunststoff imprägniert.

Gemäß der Erfindung wird die langfaserverstärkte Polyolefin-Kunststoff Struktur vorteilhaft nach dem Pultrusions-Verfahren hergestellt, wobei
I) Faserbündel durch eine flache Düse, die mit einer Schmelze aus Polyolefin (a), amorphem Cycloolefinpolymer (b) und gegebenenfalls weiteren Zusatzstoffen d) gefüllt ist, geführt werden,
II) die eingetauchten Faserbündel über eine Formdüse geführt werden,
III) die Faserbündel gekühlt werden,
IV) die Faserbündel nachgeformt werden und
V) die Faserbündel quer zur Laufrichtung auf die Länge der Struktur geschnitten oder als endlose Struktur aufgewickelt werden.

Die Imprägnierung der Faserbündel mit Kunststoff, wie beispielsweise durch Pultrusion in Schritt I) des obigen Verfahrens, kann auch nach anderen geeigneten Verfahren erfolgen. Beispielsweise kann die Faserimprägnierung mit einem Verfahren durchgeführt werden, bei dem das Faserbündel von einem Matrixwerkstoff durchtränkt wird, dadurch gekennzeichnet, daß das Faserbündel auf eine Trageeinrichtung aufgelegt wird und daß die Trageeinrichtung zusammen mit dem aufliegenden Faserbündel an einer Imprägniereinrichtung vorbeigeführt wird. Ein solches Verfahren ist in EP 756 536 beschrieben.

Die Imprägnierung der Faser kann außerdem nach einem Verfahren erfolgen, bei dem unter Verwendung eines Plastifizierextruders, bei dem ein Faserstrang über Führungsgatter und Vorwärmeinrichtung geführt in einer Imprägniervorrichtung mit flüssigem Kunststoffilm benetzt wird und anschließend in den Plastifizierextruder eingeführt, darin die einzelnen Fasern zerschnitten und vermischt und als weiterverarbeitbare faserverstärkte Kunststoffmasse ausgetragen wird, gekennzeichnet durch folgende Verfahrensschritte:
a) der Faserstrang wird über Beschichtungsdüsen in die Zuführöffnung des Plastifizierextruders vorzugsweise parallel zu den Extruderachsen und annähernd tangential auf eine Extruderwelle und um die Extruderwellen vortreibend aufgewickelt, sowie in Zylinderbohrungen von im Durchmesser um mindestens die vierfache Stärke des Faserstranges vergrößerte Schneckenzylinder eingezogern,
b) in der Zuführöffnung erfolgt dabei auf eine Flachseite des Faserstranges das Aufbringen eines Kunststoffilms aus der rechten Beschichtungsdüse direkt, während auf die zweite Flachseite das Aufbringen indirekt durch Einpressen des Faserstranges in den vorher aus der linken Beschichtungsdüse auf die Schneckenwelle aufgetragenen flüssigen Kunststoffilm erfolgt dabei wird der Faserstrang innerhalb einer Einzugs- und Imprägnierstrecke mit den einzelnen endlosen Fasern an den Extruderwellen einreibend bzw. durchreibend an beiden Flachseiten mit den flüssigen Kunststoffilmen benetzt bzw. getränkt und
c) anschließend werden die mit Kunststoff durchimprägnierten bzw. durchtränkten Einzelfasern bzw. der Faserstrang aus der Einzugs- und Imrägnierstrecke über eine Schneidkante in die im Durchmesser verkleinerten Schneckenzylinder in eine kurze Austrag- und Förderstrecke geführt und hierbei in weitgehend vorbestimmte Längen zerschnitten.

Ein solches Verfahren ist zum Beispiel beschrieben in DE 198 36 787.

Bei den beschriebenen erfindungsgemäßen umweltfreundlichen und wirtschaftlichen Verfahren wird eine stäbchenförmige Struktur mit einer bestimmten Form erhalten. Die stäbchenförmige Struktur weist eine Länge von 3 mm bis 100 mm, bevorzugt von 4 mm bis 50 mm und besonders bevorzugt von 5 mm bis 15 mm auf. Die stäbchenförmige Struktur, auch als Granulat bezeichnet, weist einen Durchmesser von 1 mm bis 10 mm auf.

Erfindungsgemäß ist auch ein Verfahren vorgesehen, wobei die Komponenten im Extruder gemischt werden, die Verstärkungsfaser durch die Schmelze benetzt und das gewonnene Material anschließend granuliert wird. Das so gewonnene Granulat kann mit Farbstoff und/oder Pigment vermischt werden und bei einem weiteren Verarbeitungsprozeß zum Bauteil verarbeitet werden.

Die langfaserverstärkten Polyolefin-Kunststoff Struktur wird auch erfindungsgemäß nach dem Compoundierverfahren oder nach dem Direktverfahren hergestellt.

Erfindungsgemäß wird ein geformter Gegenstand aus dem geschmolzenen, gegebenenfalls gefärbten langfaserverstärkten Polyolefin Granulat in an sich bekannter Weise, wie Spritzguß, Extrusion, Blasformen oder Plastifizierpressen geformt.

Die Struktur des langfaserverstärkten Polyolefins ist erfindungsgemäß stabförmig, streifenförmig, bandförmig oder flächenförmig. Bevorzugt ist die Stabform, die erhalten wird, in dem die Oberfläche der Faser, daher der zusammengesetzten gebündelten Faser, kontinuierlich parallel angeordnet mit einem thermoplastischen-Kunststoff zu einem Strang beschichtet werden.

Erfindungsgemäß können die Komponenten, ausgenommen die Verstärkungsfaser, in einem Kneter oder einem Extruder schmelzegemischt werden. Die Temperatur wird auf 5 °K bis 100 °K, bevorzugt auf 10 °K bis 60 °K oberhalb der Schmelztemperatur des höher schmelzenden Polymers eingestellt. Die Schmelzemischung ist nach einer Zeit von 30 Sekunden bis 15 Minuten, bevorzugt von 1 Minuten bis 10 Minuten abgeschlossen.

Die langfaserverstärkte Polyolefin-Kunststoff Struktur kann auch derart beschaffen sein, daß die Fasern im Wesentlichen nur von einer der Komponenten a) oder b) benetzt sind und der imprägnierte Faserstrang in der Mitte der langfaserverstärkten Polyolefin-Kunststoff-Struktur von der jeweils anderen Komponente ummantelt ist und die Komponenten a) und b) an der Oberfläche miteinander verbunden sind. Eine derartige Struktur kann beispielsweise nach einem Verfahren hergestellt werden, welches in US 6090319 beschrieben wurde. Eine solche langfaserverstärkte Kunststoff-Struktur kann hergestellt werden, indem
- nach der Faserimprägnierung nach einem der oben beschriebenen Verfahren der imprägnierte Faserstrang kontinuierlich aus der Vorrichtung zur Imprägnierung herausgezogen wird;
- das zur Ummantelung der Polyolefin-Kunststoff-Struktur vorgesehene Material kontinuierlich aufgeschmolzen und im plastischen Zustand in und der Länge nach durch eine verlängerte Preßform mit einer vollständig offenen, rohrförmigen Passage, in der sich das zur Ummantelung der Polyolefin-Kunststoff-Struktur-vorgesehene Material befindet, hindurchgepreßt wird;
- kontinuierlich der imprägnierte Faserstrang in die erwähnte verlängerte Preßform hinein und hindurch befördert wird, während gleichzeitig das zur Ummantelung des imprägnierten Faserstranges vorgesehene Material hindurchgepreßt wird;
- der imprägnierte Faserstrang mit dem geschmolzenen, zur Ummantelung der Polyolefin-Kunststoff-Struktur vorgesehenen Material in Kontakt gebracht und beschichtet und eine langfaserverstärkte Polyolefin-Kunststoff Struktur erhalten wird, bei der die Fasern im Wesentlichen nur von einer der Komponenten a) oder b) benetzt sind und der imprägnierte Faserstrang in der Mitte der langfaserverstärkten Polyolefin-Kunststoff-Struktur von der jeweils anderen Komponente ummantelt ist und die Komponenten a) und b) an der Oberfläche miteinander verbunden sind;
- die langfaserverstärkte Polyolefin-Kunststoff Struktur aus der Preßform kontinuierlich entfernt wird; und
- die Faserbündel quer zur Laufrichtung auf die Länge der Struktur geschnitten oder als endlose Struktur aufgewickelt werden.

Bei Anwendung diese Verfahrens werden die Verstärkungsfasern c) nach einem bekannten Verfahren, vorzugsweise nach dem Pultrusionsverfahren, mit einer der Komponenten a) oder b) imprägniert, die gegebenenfalls einen oder mehrere weitere Zusatzstoffe d) enthalten kann. Die erhaltene Struktur wird anschließend mit der anderen Komponente, jeweils a) oder b), beschichtet, die jeweils auch einen oder mehrere weitere Zusatzstoffe d) enthalten kann.

Bevorzugt werden die Verstärkungsfasern c) mit der Komponente a) benetzt, die vorteilhaft weitere Zusatzstoffe d) enthält, und der entstehende Strang wird anschließend mit der Komponente b) umhüllt, wobei die Komponente b) vorteilhaft weitere Zusatzstoffe d) enthalten kann.

Vorteilhaft enthalten die hier räumlich von einander getrennten Komponenten a) und b) unterschiedliche weitere Zusatzstoffe d).

Erfindungsgemäß wird die langfaserverstärkte Polyolefin-Kunststoff Struktur zur Herstellung von Formteilen verwendet. Die Formteile, hergestellt aus der erfindungsgemäßen langfaserverstärkten Polyolefin Struktur, weisen hervorragende mechanische Eigenschaften, insbesondere hervorragende Schlagzähigkeit, eine hohe Wärmeformbeständigkeit und geringe Verformbarkeit infolge von Wasserabsorption auf. Durch den geringen Verzug besitzen die Formteile außerdem eine verbesserte Paßgenauigkeit. Die Formteile können durch die bekannten Verarbeitungsverfahren, wie beispielsweise durch Spritzguß, Preßformen, Blasformen aus den erfindungsgemäßen langfaserverstärkten Polyolefin-Kunststoff Strukturen hergestellt werden. Derartige Formteile können auch erhalten werden durch Mischen bereits handelsüblicher langfaserverstärkter Polyolefin-Kunststoff Strukturen mit einem Granulat aus amorphem Cycloolefinpolymer und anschließender Herstellung der Formteile nach den bekannten Verfahren aus diesem Granulatgemisch, so daß der Gehalt an amorphem Cycloolefinpolymer in der Granulatmischung und den hieraus hergestellten Formteilen dem Gehalt an amorphem Cycloolefinpolymer der erfindungsgemäßen Polyolefin-Kunststoff Strukturen entspricht.

Erfindungsgemäß wird die langfaserverstärkte Polyolefin-Kunststoff Struktur bevorzugt zur Herstellung von mechanisch und thermisch hoch beanspruchten gegebenenfalls gefärbten Formteilen, wie Formteile im Kraftfahrzeugbau, besonders aufgrund der geringen Geruchsemission im Innenbereich eines Kraftfahrzeugs verwendet.

## Patentansprüche

1. Langfaserverstärkte Polyolefin-Kunststoff Struktur mit einer Länge von ≥ 3 mm, enthaltend
a) 0.1 Gew.-% bis 90 Gew.-% mindestens eines Polyolefin-Kunststoffes, der von b) verschieden ist,
b) 0.1 Gew.-% bis 50 Gew.-% mindestens eines amorphen Cycloolefinpolymeren,
c) 5.0 Gew.-% bis 75 Gew.-% mindestens einer Verstärkungsfaser,
d) bis 10.0 Gew.-% weitere Zusatzstoffe.

2. Langfaserverstärkte Polyolefin-Kunststoff Struktur nach Anspruch 1, enthaltend
a) 4.0 Gew.-% bis 70 Gew.-% mindestens eines Polyolefin-Kunststoffes, der von b) verschieden ist,
b) 1.0 Gew.-% bis 30 Gew.-% mindestens eines amorphen Cycloolefinpolymeren,
c) 10 Gew.-% bis 65 Gew.-% mindestens eines Verstärkungsfasers,
d) 0.15 Gew.-% bis 7.5 Gew.-% weitere Zusatzstoffe.

3. Langfaserverstärkte Polyolefin-Kunststoff Struktur nach Anspruch 1 oder 2, enthaltend
a) 30 Gew.-% bis 70 Gew.-% mindestens eines Polyolefin-Kunststoffes, der von b) verschieden ist
b) 4.0 Gew.-% bis 20 Gew.-% mindestens eines amorphen Cycloolefinpolymeren,
c) 19 Gew.-% bis 58 Gew.-% mindestens einer Verstärkungsfaser,
d) 0.2 Gew.-% bis 5.0 Gew.-% weitere Zusatzstoffe.

4. Langfaserverstärkte Polyolefin-Kunststoff Struktur nach einem oder mehreren der Ansprüche 1 bis 3, wobei der von b) verschiedene Polyolefin-Kunststoff, Komponente a), modifiziertes Polyolefin enthält.

5. Langfaserverstärkte Polyolefin-Kunststoff Struktur nach einem oder mehreren der Ansprüche 1 bis 4, wobei der von b) verschiedene Polyolefin-Kunststoff, Komponente a), durch Polymerisation des Ethylens oder eines α-Olefins erhältlich ist.

6. Langfaserverstärkte Polyolefin-Kunststoff Struktur nach einem oder mehreren der Ansprüche 1 bis 5, wobei der von b) verschiedene Polyolefin-Kunststoff Polypropylen ist.

7. Langfaserverstärkte Polyolefin-Kunststoff Struktur nach einem oder mehreren der Ansprüche 1 bis 6, wobei die Verstärkungsfaser c) Talkum, Stahlfaser, Wolastonit, Stahlfaser oder Glasfaser ist.

8. Langfaserverstärkte Polyolefin-Kunststoff Struktur nach einem oder mehreren der Ansprüche 1 bis 7, die eine Länge von 3 mm bis 100 mm aufweist.

9. Langfaserverstärkte Polyolefin-Kunststoff Struktur nach einem oder mehreren der Ansprüche 1 bis 8, wobei als weiterer Zusatzstoff mindestens ein Antioxidationsmittel und/oder UV-Stabilisator und/oder Farbmasterbatch enthalten ist.

10. Langfaserverstärkte Polyolefin-Kunststoff Struktur nach einem oder mehreren der Ansprüche 1 bis 9, wobei 0.1 Gew.-% bis 4.0 Gew.-%, bevorzugt 0.15 Gew.-% bis 3.0 Gew.-% und besonders bevorzugt 0.2 Gew.-% bis 2.0 Gew.-% Antioxidationsmittel enthalten sind.

11. Langfaserverstärkte Polyolefin-Kunststoff Struktur nach einem oder mehreren der Ansprüche 1 bis 10, wobei 0.1 Gew.-% bis 4.0 Gew.-%, bevorzugt 0.15 Gew.-% bis 3.0 Gew.-% und besonders bevorzugt 0.2 Gew.-% bis 2.0 Gew.-% UV-Stabilisator enthalten sind.

12. Langfaserverstärkte Polyolefin-Kunststoff Struktur nach einem oder mehreren der Ansprüche 1 bis 11, wobei 0.1 Gew.-% bis 4.0 Gew.-%, bevorzugt 0.15 Gew.-% bis 3.0 Gew.-% und besonders bevorzugt 0.5 Gew.-% bis 1.5 Gew.-% Farbmasterbatch enthalten sind.

13. Langfaserverstärkte Polyolefin-Kunststoff Struktur nach einem oder mehreren der Ansprüche 1 bis 12, wobei der von b) verschiedene Polyolefin-Kunststoff ein Polyamid, insbesondere Nylon 6 und/oder Nylon 66 enthält.

14. Langfaserverstärkte Polyolefin-Kunststoff Struktur nach einem oder mehreren der Ansprüche 1 bis 13, wobei als amorphes Cycloolefinpolymer Copolymere des Ethylens und/oder von α-Olefinen mit cyclischen, bicyclischen und/oder polycyclischen Olefinen eingesetzt wird.

15. Langfaserverstärkte Polyolefin-Kunststoff Struktur nach einem oder mehreren der Ansprüche 1 bis 14, wobei als amorphes Cycloolefinpolymer Copolymere von Ethylen und Norbornen verwendet werden.

16. Langfaserverstärkte Polyolefin-Kunststoff Struktur nach einem oder mehreren der Ansprüche 1 bis 15, **dadurch gekennzeichnet, daß** sie ausgebildet ist als ein mit Kunststoff nicht imprägniertes Glasfaserbündel, welches mit mindestens einer Kunststoffschicht ummantelt ist.

17. Langfaserverstärkte Polyolefin-Kunststoff Struktur nach einem oder mehreren der Ansprüche 1 bis 15, **dadurch gekennzeichnet, daß** die Fasern im Wesentlichen nur von einer der Komponenten a) oder b) benetzt sind und der imprägnierte Faserstrang in der Mitte der langfaserverstärkten Polyolefin-Kunststoff-Struktur von der jeweils anderen Komponente ummantelt ist und die Komponenten a) und b) an der Oberfläche miteinander verbunden sind.

18. Verfahren zur Herstellung einer langfaserverstärkten Polyolefin-Kunststoff Struktur nach einem oder mehreren der Ansprüche 1 bis 17, wobei
I) Faserbündel durch eine flache Düse, die mit einer Schmelze aus Polyolefin (a), amorphem Cycloolefinpolymer (b) und gegebenenfalls weiteren Zusatzstoffen (d) gefüllt ist, geführt werden,
II) die eingetauchten Faserbündel über eine Formdüse geführt werden,
III) die Faserbündel gekühlt werden,
IV) die Faserbündel nachgeformt werden und
V) die Faserbündel quer zur Laufrichtung auf die Länge der Struktur geschnitten oder als endlose Struktur aufgewickelt werden.

19. Verfahren zur Herstellung einer langfaserverstärkten Polyolefin-Kunststoff Struktur nach einem oder mehreren der Ansprüche 1 bis 18, **dadurch gekennzeichnet, daß** das Faserbündel von einem Matrixwerkstoff durchtränkt wird, wobei das Faserbündel auf eine Trageeinrichtung aufgelegt wird und daß die Trageeinrichtung zusammen mit dem aufliegenden Faserbündel an einer Imprägniereinrichtung vorbeigeführt wird.

20. Verfahren zur Herstellung einer langfaserverstärkten Polyolefin-Kunststoff Struktur nach einem oder mehreren der Ansprüche 1 bis 19, dadurch gekenzeichnet, daß unter Verwendung eines Plastifizierextruders, bei dem ein Faserstrang über Führungsgatter und Vorwärmeinrichtung geführt in einer Imprägniervorrichtung mit flüssigem Kunststoffilm benetzt wird und anschließend in den Plastifizierextruder eingeführt, darin die einzelnen Fasern zerschnitten und vermischt und als weiterverarbeitbare faserverstärkte Kunststoffmasse ausgetragen wird, **gekennzeichnet durch** folgende Verfahrensschritte: der Faserstrang wird über Beschichtungsdüsen in die Zuführöffnung des Plastifizierextruders vorzugsweise parallel zu den Extruderachsen und annähernd tangential auf eine Extruderwelle und um die Extruderwellen vortreibend aufgewickelt, sowie in Zylinderbohrungen von im Durchmesser um mindestens die vierfache Stärke des Faserstranges vergrößerte Schneckenzylinder eingezogen;in der Zuführöffnung erfolgt dabei auf eine Flachseite des Faserstranges das Aufbringen eines Kunststoffilms aus der rechten Beschichtungsdüse direkt, während auf die zweite Flachseite das Aufbringen indirekt **durch** Einpressen des Faserstranges in den vorher aus der linken Beschichtungsdüse auf die Schneckenwelle aufgetragenen flüssigen Kunststoffilm erfolgt dabei wird der Faserstrang innerhalb einer Einzugs- und Imprägnierstrecke mit den einzelnen endlosen Fasern an den Extruderwellen einreibend bzw. durchreibend an beiden Flachseiten mit den flüssigen Kunststoffilmen benetzt bzw. getränkt und anschließend werden die mit Kunststoff durchimprägnierten bzw. durchtränkten Einzelfasern bzw. der Faserstrang aus der Einzugs- und Imrägnierstrecke über eine Schneidkante in die im Durchmesser verkleinerten Schneckenzylinder in eine kurze Austragund Förderstrecke geführt und hierbei in weitgehend vorbestimmte Längen zerschnitten.

21. Verfahren zur Herstellung einer langfaserverstärkten Polyolefin-Kunststoff Struktur nach einem oder mehreren der Ansprüche 1 bis 20, dadurch gekenzeichnet, daß nach der Faserimprägnierung nach einem der oben beschriebenen Verfahren der imprägnierte Faserstrang kontinuierlich aus der Vorrichtung zur Imprägnierung herausgezogen wird; das zur Ummantelung der Polyolefin-Kunststoff-Struktur vorgesehene Material kontinuierlich aufgeschmolzen und im plastischen Zustand in und der Länge nach durch eine verlängerte Preßform mit einer vollständig offenen, rohrförmigen Passage, in der sich das zur Ummantelung der Polyolefin-Kunststoff-Struktur vorgesehene Material befindet, hindurchgepreßt wird; kontinuierlich der imprägnierte Faserstrang in die erwähnte verlängerte Preßform hinein und hindurch befördert wird, während gleichzeitig das zur Ummantelung des imprägnierten Faserstranges vorgesehene Material hindurchgepreßt wird; der imprägnierte Faserstrang mit dem geschmolzenen, zur Ummantelung der Polyolefin-Kunststoff-Struktur vorgesehenen Material in Kontakt gebracht und beschichtet und eine langfaserverstärkte Polyolefin-Kunststoff Struktur erhalten wird, bei der die Fasern im Wesentlichen nur von einer der Komponenten a) oder b) benetzt sind und der imprägnierte Faserstrang in der Mitte der langfaserverstärkten Polyolefin-Kunststoff-Struktur von der jeweils anderen Komponente ummantelt ist und die Komponenten a) und b) an der Oberfläche miteinander verbunden sind; die langfaserverstärkte Polyolefin-Kunststoff Struktur aus der Preßform kontinuierlich entfernt wird; und die Faserbündel quer zur Laufrichtung auf die Länge der Struktur geschnitten oder als endlose Struktur aufgewickelt werden.

22. Ein geformter Gegenstand aus einer langfaserverstärkten Polyolefin-Kunststoff Struktur nach einem oder mehreren der Ansprüche 1 bis 17, hergestellt durch Spritzguß, Extrusion, Blasformen oder Plastifizierpressen.

23. Verfahren zur Herstellung eines langfaserverstärkten geformten Gegenstandes enthaltend ein amorphes Cycloolefinpolymer, **dadurch gekennzeichnet, daß** handelsübliche langfaserverstärkte Polyolefin-Kunststoff Strukturen mit einem Granulat aus amorphem Cycloolefinpolymer gemischt werden und anschließend aus diesem Granulatgemisch ein geformter Gegenstand hergestellt wird.

24. Ein geformter Gegenstand enthaltend
a) 0.1 Gew.-% bis 90 Gew.-% mindestens eines Polyolefin-Kunststoffes, der von b) verschieden ist,
b) 0.1 Gew.-% bis 50 Gew.-% mindestens eines amorphen Cycloolefinpolymeren,
c) 5.0 Gew.-% bis 75 Gew.-% mindestens einer Verstärkungsfaser,
d) bis 10.0 Gew.-% weitere Zusatzstoffe.

25. Verwendung einer langfaserverstärkten Polyolefin-Kunststoff Struktur nach einem oder mehreren der Ansprüche 1 bis 17 zur Herstellung von Formteilen im Innenbereich und Außenbereich von Kraftfahrzeugen.
